# EUROPEAN PATENT APPLICATION

(11) **EP 3 869 324 A2**
(43) Date of publication of application: **25.08.2021**
(21) Application number: 21180018.0
(22) Date of filing: 17.06.2021
(51) Int. Cl.: G06F 3/16, G10L 15/22, G10L 15/28

(54) **VOICE DATA PROCESSING METHOD, APPARATUS, STORAGE MEDIUM AND COMPUTER PROGRAM PRODUCT**

(30) Priority: 21.12.2020 CN 202011522032
(71) Applicant: BEIJING BAIDU NETCOM SCIENCE TECHNOLOGY CO., LTD., No.10 Shangdi 10th Street Haidian District Beijing 100085 (CN)
(72) Inventor: PENG, Jingwei, Beijing (CN); ZUO, Shengyong, Beijing (CN); ZHOU, Yi, Beijing (CN); YIN, Qie, Beijing (CN)
(74) Representative: Studio Torta S.p.A.

(57) **Abstract**

The present application discloses a voice data processing method, an apparatus, a device and a storage media, and relates to artificial intelligence fields such as intelligent transportation and voice technologies. The specific implementation solution is: starting a microphone management thread to collect audio data acquired by a microphone in a process of a voice interactive application, and based on a state of the voice interactive application, when the voice interactive application is in a non-wake-up state, starting a wake-up thread to perform wake-up processing on the voice interactive application according to the audio data, and a wake-up engine does not need to request the microphone separately; after waking up successfully and entering the non-wake-up state, there is no need to request the microphone separately by a recognition engine which performs voice recognition on the audio data collected by the microphone management thread, thereby realizing the wake-up engine and the recognition engine in the same process. The wake-up engine and the recognition engine do not need to request the microphone, thus avoiding a problem of losing part of data due to waiting for preparation of the microphone, and improving efficiency and accuracy of the voice interactive application.

## Description

### TECHNICAL FIELD

The present application relates to artificial intelligences filed such as intelligent transportation and voice technologies and, in particular, to a voice data processing method, an apparatus, a device, and a storage medium.

### BACKGROUND

At present, most of vehicle-and-machine systems of vehicles are Android systems, and the use of a microphone is limited in the Android system. When an application programming interface (API) of the system is called to record microphone data, if a process is already using the microphone, the Android system will return an error code when other processes request to use the microphone. This error code indicates that other processes are using the microphone, and it takes time to activate and release the microphone.

A wake-up engine and a recognition engine in a voice interactive application of the vehicle both rely on the microphone to work, and the wake-up engine and the recognition engine need to actively acquire audio data collected by the microphone. Since it takes time to activate and release the microphone, the microphone may not be ready when the wake-up engine and the recognition engine need to work, therefore, in the audio data acquired by the wake-up engine and the recognition engine, some of voice from a user will be lost.

### SUMMARY

The present application provides a voice data processing method and apparatus, a device, and a storage medium.

According to one aspect of the present application, a voice data processing method is provided, the voice data processing method includes:
starting a microphone management thread to collect audio data acquired by a microphone in a process of a voice interactive application; and
when the voice interactive application is in a non-wake-up state, starting a wake-up thread to perform wake-up processing on the voice interactive application according to the audio data.

According to another aspect of the present application, a voice data processing apparatus is provided, and the voice data processing apparatus includes:
a microphone managing module, configured to start a microphone management thread to collect audio data acquired by a microphone in a process of a voice interactive application; and
an audio data processing module, configured to: when the voice interactive application is in a non-wake-up state, start a wake-up thread to perform wake-up processing on the voice interactive application according to the audio data.

According to another aspect of the present application, an electronic device is provided, and the device includes:
at least one processor; and
a memory communicatively connected with the at least one processor; where
the memory stores an instruction executed by the at least one processor, and the instruction is executed by the at least one processor, so as to enable the at least one processor to execute the above-mentioned method.

According to another aspect of the present application, a non-transitory computer-readable storage medium storing a computer instruction is provided to cause a computer to execute the above-mentioned method.

According to another aspect of the present application, a computer program product is provided, and the program product includes: a computer program, the computer program is stored in a readable storage medium, and at least one processor of an electronic device can read the computer program from the readable storage medium, and the at least one processor executes the computer program to cause the electronic device to execute the method described above.

According to another aspect of the present application, a computer program stored in a readable storage medium is provided, where at least one processor of an electronic device can read the computer program from the readable storage medium, and the at least one processor executes the computer program to enable the electronic device to execute the method described above.

The technical solution according to the present application improves efficiency and accuracy of the voice interactive application.

It should be understood that the content described in this section is not intended to identify a key or important feature of the embodiments of the present application, nor is it intended to limit a scope of the present application. Other features of the present application will be easily understood through the following description.

### BRIEF DESCRIPTION OF DRAWINGS

The drawings are used to better understand the solutions, and do not constitute a limitation to the application, where:
FIG. 1 is a frame schematic diagram of a voice data processing provided by an embodiment of the present application;
FIG. 2 is a flowchart of a voice data processing method provided by an embodiment of the present application;
FIG. 3 is a flowchart of a voice data processing method provided by an embodiment of the present application;
FIG. 4 is an overall frame flowchart diagram of a voice data processing provided by an embodiment of the present application;
FIG. 5 is a schematic diagram of a voice data processing apparatus provided by an embodiment of the present application; and
FIG. 6 is a block diagram of an electronic device configured to implement a voice data processing method in an embodiment of the present application.

### DESCRIPTION OF EMBODIMENTS

The following describes exemplary embodiments of the present application with reference to the drawings, which include various details of the embodiments of the present application to facilitate understanding, and should be regarded as merely exemplary. Therefore, those of ordinary skill in the art should realize that various changes and modifications can be made to the embodiments described herein without departing from a scope of the present application. Similarly, for clarity and conciseness, descriptions of well-known functions and structures are omitted in the following description.

At present, most of the vehicle-and-machine systems of vehicles are Android systems, and the use of a microphone is limited in the Android system. When an application program interface (API) of the system is called to record microphone data, if a process is already using the microphone, the Android system will return an error code when other processes request to use the microphone. This error code indicates that other processes are using the microphone, and it takes time to activate and release the microphone.

A wake-up engine and a recognition engine in a voice interactive application of the vehicle both rely on the microphone to work, and the wake-up engine and the recognition engine respectively correspond to a process and need to actively acquire audio data collected by the microphone. Generally, the vehicle-and-machine system may maintain a thread pool. When the wake-up engine needs to be started, the corresponding process of the wake-up engine uses the thread pool to create a new thread, and at the same time initializes the AudioRecord (the startingrecording related class in the Android system) object (that is, initialize the microphone), actives the microphone, collects and inputs audio data to the wake-up engine. After detecting that the wake-up is successful, the wake-up engine exits the current thread and releases the AudioRecord object, thereby releasing the microphone. Then the corresponding process of the recognition engine uses the thread pool to create a new thread, reinitializes the AudioRecord object in this thread, actives the microphone, and collects and sends audio data to the recognition engine. After returning the recognition result, the recognition engine exits the current thread, releases the AudioRecord object, and thus releases the microphone. Then when there is needs to wake up or recognition, the thread is restarted, the microphone is initialized, audio data is collected, and the microphone is released, and so on. Since it takes time to activate and release the microphone, the microphone may not be ready when the wake-up engine and the recognition engine need to work, therefore, in the audio data acquired by the wake-up engine and the recognition engine, some of voice from a user will be lost. Maintenance of the thread pool and multiple times of creation and consumption of the microphone object result in a waste of CPU and memory.

The present application provides a voice data processing method and apparatus, a device, and a storage medium, which are applied to artificial intelligence fields such as intelligent transportation and voice technologies to improve efficiency and accuracy of a voice interactive application.

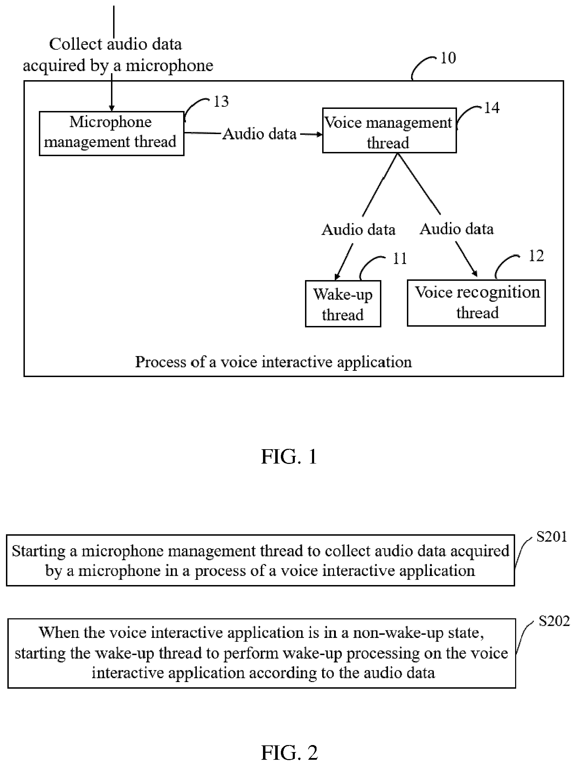

The voice data processing method provided in the present application is specifically applied to the voice interactive application, and can be devices, such as vehicle-and-machine systems and smart audios based on Android system voice interactive applications. A voice interactive application usually includes two modules, e.g., a wake-up engine and a voice recognition engine. In the embodiment of the present application, as shown in FIG. 1, in a same process 10 of the voice interactive application, a wake-up thread 11 and a voice recognition thread 12 are used to implement the two modules including the wake-up engine and the voice recognition engine respectively. A microphone management thread 13 is specifically used to collect audio data acquired by the microphone and send the audio data to the voice management thread 14. The voice management thread 14 is responsible for distributing the audio data to the wake-up thread and the voice recognition thread based on a state of the voice interactive application. There is no need for the wake-up engine and the recognition engine to request the use of the microphone separately, thereby improving the efficiency of collecting audio data, avoiding a problem of losing part of acquired audio data due to waiting for preparation of the microphone device; besides, the requesting of the microphone is performed for one time, but the use of the microphone lasts for a long time, thereby reducing a waste of CPU and memory due to the maintenance of a thread pool and multiple times of creation and consumption of the microphone object.

FIG. 2 is a flowchart of a voice data processing method provided by an embodiment of the present application. The method provided in the embodiment is applied to a voice data processing apparatus, and may be an electronic device used to implement a voice interactive function. As shown in FIG. 2, the specific steps of the method are as follows:
step S201: starting a microphone management thread to collect audio data acquired by a microphone in a process of a voice interactive application.

In the embodiment, in the same process of the voice interactive application, two modules, e.g., the wake-up engine and the voice recognition engine, are implemented. The wake-up engine and the voice recognition engine respectively correspond to a thread. The wake-up function is realized by using the wake-up thread, and the voice recognition function is realized by using the voice recognition thread. The microphone management thread is responsible for requesting the microphone and collecting the audio data acquired by the microphone. The wake-up engine and the voice recognition engine do not need to separately request the microphone to collect the audio data acquired by the microphone.

Step S202: when the voice interactive application is in a non-wake-up state, starting the wake-up thread to perform wake-up processing on the voice interactive application according to the audio data.

After the microphone management thread collects the audio data acquired by the microphone, according to a current state of the voice interactive application, when the voice interactive application is in a non-wake-up state, then a wake-up thread corresponding to the wake-up engine is started, and wake-up processing is performed on the voice interactive application according to the audio data.

After the voice interactive application is successfully waked up, the voice interactive application enters a non-wake-up state. When the audio data acquired by the microphone is subsequently collected, the voice recognition thread can directly perform voice recognition on the audio data.

In the embodiment of the application, in the process of the voice interactive application, the microphone management thread is specifically responsible for collecting audio data acquired by the microphone, and then based on the state of the voice interactive application, when the voice interactive application is in a non-wake-up state, the wake-up thread is started to perform wake-up processing on voice interactive applications based on the audio data. The wake-up engine does not need to request the microphone separately. Furthermore, after the wake-up is performed successful and entering the non-wake-up state, there is no need for the recognition engine to request the microphone separately, which can directly perform voice recognition on the audio data collected by the microphone management thread, thus the wake-up engine and the recognition engine can be realized in the same process. There is no need for the wake-up engine and the recognition engine to request the use of the microphone in turn, thereby improving the efficiency of collecting audio data acquired by the microphone by the wake-up engine and the recognition engine, avoiding the problem of losing part of the acquired audio data due to waiting for preparation of the microphone device, thus improving the efficiency and accuracy of the voice interactive application.

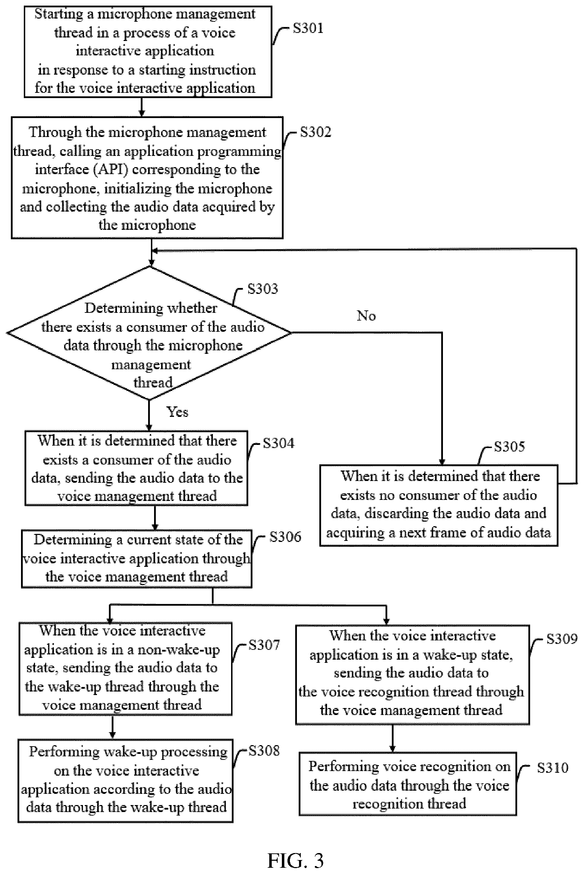

FIG. 3 is a flowchart of a voice data processing method provided by an embodiment of the present application. On the basis of the above-mentioned embodiment, in the embodiment, when the voice interactive application is in a wake-up state, the voice recognition thread is started to perform voice recognition on the audio data, or when the voice interactive application is in a wake-up state, the voice recognition thread is started to perform voice recognition on the audio data, and the wake-up thread is started to perform wake-up processing on the voice interactive application again according to the audio data.

As shown in FIG. 3, the specific steps of the method are as follows:
step S301: starting a microphone management thread in a process of a voice interactive application in response to a starting instruction for the voice interactive application.

In the embodiment, when the voice interactive application is started, the microphone management thread is started in the process of the voice interactive application. The microphone management thread is a thread dedicated to requesting a microphone, collecting audio data acquired by the microphone, and releasing the microphone.

Illustratively, when the user starts the voice interactive application, a starting instruction is sent to the voice data processing apparatus. For example, usually when the user starts the vehicle, the vehicle-and-machine system is powered on, or the user plugs in a smart audio device, the voice interactive application on the vehicle-and-machine system or smart audio will be started. At this time, it can be considered that the starting instruction for the voice interactive application is received. The microphone management thread is started in the process of the voice interactive application.

In response to the starting instruction for the voice interactive application, the voice data processing apparatus starts the microphone management thread in the process of the voice interactive application.

Step S302: through the microphone management thread, calling an application programming interface (API) corresponding to the microphone, initializing the microphone and collecting the audio data acquired by the microphone.

After the microphone management thread is started in the process, through the microphone management thread, the application programming interface (API) corresponding to the microphone is called to request the use of microphone, and the microphone is initialized. After the requesting of the microphone is completed, the audio data acquired by the microphone is collected.

In the embodiment, a specific implementation method of requesting a microphone and collecting audio data acquired by the microphone through the microphone management thread is similar to the method of requesting a microphone and collecting audio data acquired by the microphone in the prior art through a process or on-site, which is not repeated here in the embodiments.

In addition, in the embodiment, after requesting the microphone, the microphone management thread continues to use the microphone and collects the audio data acquired by the microphone, and releases the microphone until receiving a closing instruction for the voice interactive application.

For example, when the vehicle-and-machine system is powered off, or when the user powers off the smart audio device, the voice interactive application on the vehicle-and-machine system or smart audio will be closed. At this time, it can be considered that the closing instruction for the voice interactive application is received, and the microphone management thread releases the microphone.

Through the above steps S301-S302, the microphone management thread is started, and the audio data acquired by the microphone is collected. When the voice interactive application is started, the microphone management thread can be started in the process of the voice interactive application to request the microphone, and the microphone management thread continues to use the microphone and collects the audio data acquired by the microphone until the voice interactive application is closed, at which time the microphone management thread releases the microphone. Hence, the requesting of the microphone is performed for one time, but the use of the microphone lasts for a long time, thereby reducing the waste of CPU and memory due to the maintenance of the thread pool and multiple times of requesting and releasing of the microphone.

In the embodiment, the voice management thread in the same process may be responsible for distributing the audio data (which is acquired by the microphone and collected through the microphone management thread) to the thread corresponding to the wake-up engine and voice recognition engine that need the audio data acquired by the microphone.

After starting the microphone management thread to collect the audio data acquired by the microphone, the microphone management thread may transmit the audio data to the voice management thread according to the following steps S303-S305.

Step S303: determining whether there exists a consumer of the audio data through the microphone management thread.

Where the consumer of the audio data refers to the thread requesting the use of the audio data, that is, the thread corresponding to a functional module (including the wake-up engine and the voice recognition engine) that needs to use the audio data.

When it is determined that there exists a consumer of the audio data, execute step S304.

When it is determined that there exists no consumer of the audio data, execute step S305.

Illustratively, when the audio data acquired by the microphone is needed, the functional module can register, and the microphone management thread can determine whether there exists a consumer of the audio data based on the registration information every time the microphone management thread collects a frame of audio data d.

Optionally, when the wake-up engine or the voice recognition engine needs to use the audio data acquired by the microphone, a callback function can be registered with the microphone management thread or the voice data processing device, and the microphone management thread can query the registered callback function. Each time the microphone management thread collects a frame of audio data, it determines whether there exists the registered callback function by querying the registered information. If there exists the registered callback function, it is determined that there exists a consumer of the audio data. If there exists no registered callback function, it is determined that there exists no consumer of the audio data. Optionally, the voice management thread can transmit the audio data to the corresponding functional module by calling the registered callback function.

Step S304: sending the audio data to the voice management thread when it is determined that there exists a consumer of the audio data.

If in the above step S303, it is determined that there exists a consumer of the audio data through the microphone management thread, then in this step, the microphone management thread sends the audio data to the voice management thread, and the voice management thread subsequently distributes the audio data to the customer who needs to use the audio data.

Step S305: when it is determined that there exists no consumer of the audio data, discarding the audio data and acquiring a next frame of audio data.

In the above step S303, when it is determined that there exists no consumer of the audio data through the microphone management thread, then in this step, the microphone management thread discards the audio data and continues to collect the next frame of audio data.

Step S306: determining a current state of the voice interactive application through the voice management thread.

Optionally, the state flag information of the voice interactive application can be stored through a state flag bit.

In this step, the state flag information of the voice interactive application is acquired through the voice management thread, and a current state of the voice interactive application is determined according to the state flag information.

In addition, the state flag information of the voice interactive application can also be implemented by any method for storing state information in the prior art, which will not be repeated here in the embodiment.

After determining the current state of the voice interactive application, the voice management thread distributes the audio data to the wake-up engine and/or recognition engine that needs to use the audio data according to the current state of the voice interactive application according to the following steps S307-S310.

Step S307: when the voice interactive application is in a non-wake-up state, sending the audio data to the wake-up thread through the voice management thread.

When the voice interactive application is in the non-wake-up state, the voice interactive application needs to be waked up first, and then the audio data is sent to the wake-up thread through the voice management thread.

Step S308: performing wake-up processing on the voice interactive application according to the audio data through the wake-up thread.

After acquiring the audio data, the wake-up thread performs wake-up processing on the voice interactive application according to the audio data.

After the voice interactive application is waked up successfully, the state flag information is set to the wake-up state, and the voice interactive application enters the wake-up state.

Step S309: when the voice interactive application is in a wake-up state, sending the audio data to the voice recognition thread through the voice management thread.

When the voice interactive application is in the wake-up state and the recognition engine needs to recognize user instruction information in the audio data, then the audio data is sent to the voice recognition thread through the voice management thread.

Step S310: performing voice recognition on the audio data through the voice recognition thread.

After acquiring the audio data, the voice recognition thread performs voice recognition on the audio data to identify the user instruction information in the audio data.

However, in an application scenario, after the user sends an interactive command, during the process of voice recognition by the recognition engine or when playing response information for the interactive command, the user wants to interrupt this interaction and enter directly to the next interaction, the voice interactive application needs to be waked up again at this time. However, in the current voice interactive application, after the wake-up is successful and the recognition engine is started, the recognition engine will occupy the microphone, and the wake-up engine will not work, therefore, the needs of interrupting or canceling the current recognition by virtue of a wake-up expression during the recognition process, directly waking up and entering to the next interaction cannot be met.

In an optional implementation, when the voice interactive application is in a non-wake-up state, the audio data is sent to the wake-up thread and the voice recognition thread through the voice management thread; the wake-up processing is performed on the voice interactive application according to the audio data through the wake-up thread and the voice recognition is performed on the audio data through the voice recognition thread. In this way, if the user wants to interrupt the current interaction process and directly enter the next interaction by waking up again, then the user may speak out the wake-up expression, and the audio data acquired by the microphone contains the wake-up expression from the user. After acquiring the audio data, in the wake-up state, the voice management thread can also send the audio data to the wake-up thread corresponding to the wake-up engine, so as to perform wake-up processing on the voice interactive application again through the wake-up thread to meet the user's needs in the above-mentioned scenario.

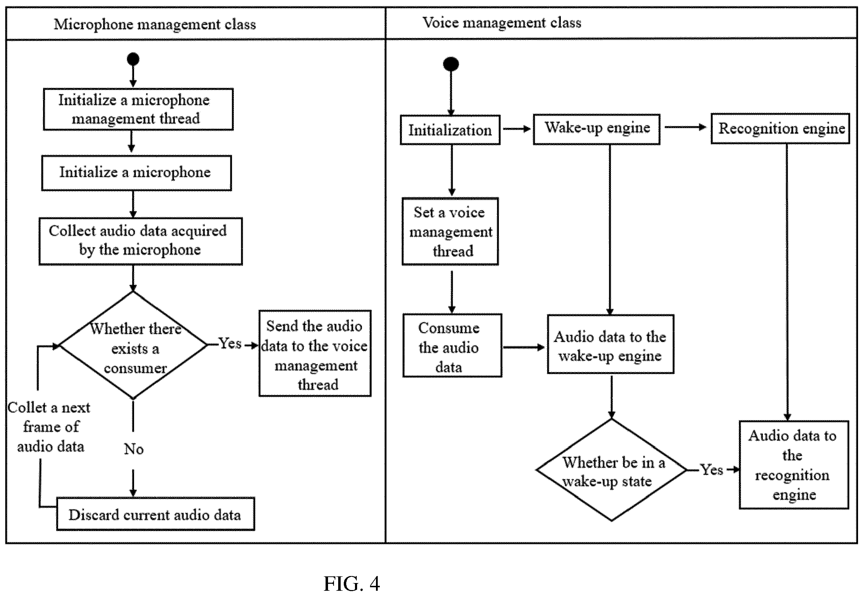

Exemplarily, in this implementation manner, a microphone management class can be encapsulated for starting the microphone management thread, through the microphone management thread, the microphone is initialized, the audio data acquired by the microphone is collected, and the audio data is sent through a provided interface to the voice management class; a voice management class can be encapsulated for coordinating the recognition engine and the wake-up engine, a voice management thread is started, the audio data is acquired from the microphone management thread, and the audio data is distributed to the functional modules (including the wake-up engine and/or the recognition engine) that need the audio data to realize the management of collecting of the audio data acquired by the microphone. As shown in FIG. 4, the overall process framework of the voice data processing is as follows: the microphone management class initializes the microphone management thread, through the microphone management thread, the microphone is initialized and the audio data acquired by the microphone is collected, and it is determined whether there exists a consumer; if there exists no consumer, the current audio data is discarded and a next frame of audio data is collected, if there exists a consumer, then the audio data will be sent to the voice management thread. The voice management class initializes the voice management thread, the wake-up engine and the recognition engine, the audio data is consumed through the voice management thread, the audio data is sent to the wake-up engine no matter whether the voice interactive application is in the wake-up state or the non-wake-up state. Then the voice interactive application is waked up successfully, and after the voice interactive application enters the recognition state, the audio data is also sent to the recognition engine.

In the embodiment of the application, in the same process of the voice interactive application, the microphone management thread is specifically responsible for collecting the audio data acquired by the microphone and transmitting the audio data to the voice management thread, and then the voice management thread is responsible for distributing the audio data to functional modules (including the wake-up engine and/or the recognition engine) that need the audio data according to the state of the voice interactive application, in this way, the wake-up engine and recognition engine can be realized in the same process without requesting the microphone by the wake-up engine and the recognition engine separately, thereby improving the efficiency of collecting the audio data acquired by the microphone by the wake-up engine and the recognition engine, avoiding the problem of losing part of the audio data due to waiting for preparation of the microphone device, thus improving the efficiency and accuracy of the voice interactive application; in addition, when the voice interactive application is started, the microphone management thread is started in the process of the voice interactive application to request the microphone. The microphone management thread continues to use the microphone and collects the audio data acquired by the microphone, until the voice interactive application is closed. The microphone management thread releases the microphone, requests the microphone for one time and uses it for a long time, thus reducing the waste of CPU and memory due to the maintenance of a thread pool and multiple times of requesting and releasing of the microphone. Furthermore, when the voice interactive application is in a non-wake-up state, the audio data is sent to the wake-up thread and the voice recognition thread, thereby interrupting the current voice recognition of the recognition engine through the wake-up engine, waking up the voice interactive application again, and directly entering to the next interaction to meet the needs of a user.

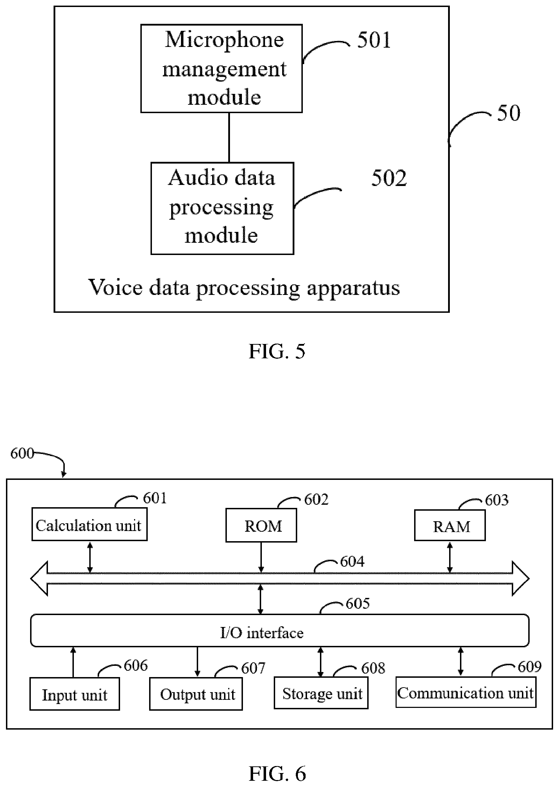

FIG. 5 is a schematic diagram of a voice data processing apparatus provided by an embodiment of the present application. The voice data processing apparatus provided by the embodiment of the present application can execute the process flow provided in the voice data processing method embodiment. As shown in FIG. 5, the voice data processing apparatus 50 includes: a microphone managing module 501 and an audio data processing module 502.

Specifically, the microphone managing module 501 is configured to start the microphone management thread to collect audio data acquired by a microphone during a process of a voice interactive application.

The audio data processing module 502 is configured to: when the voice interactive application is in a non-wake-up state, start a wake-up thread to perform wake-up processing on the voice interactive application according to the audio data.

The apparatus provided by the embodiment of the present application may be specifically configured to execute the method embodiment provided in the above-mentioned embodiment, and the specific functions will not be repeated here.

In the embodiment of the application, in the process of the voice interactive application, the microphone management thread is specifically responsible for collecting the audio data acquired by the microphone, and then based on the state of the voice interactive application, when the voice interactive application is in a non-wake-up state, the wake-up thread is started to perform wake-up processing on voice interactive applications based on the audio data. The wake-up engine does not need to request the microphone separately. Furthermore, after the wake-up is performed successful and entering the non-wake-up state, there is no need for the recognition engine to request the microphone separately, which can directly perform voice recognition on the audio data collected by the microphone management thread, thus the wake-up engine and the recognition engine can be realized in the same process. There is no need for the wake-up engine and the recognition engine to request the use of the microphone in turn, thereby improving the efficiency of collecting audio data acquired by the microphone by the wake-up engine and the recognition engine, avoiding the problem of losing part of the acquired audio data due to waiting for preparation of the microphone device, thus improving the efficiency and accuracy of the voice interactive application.

Based on the foregoing embodiment, in an optional implementation manner of the fourth embodiment of the present application, the audio data processing module is further configured to:
when the voice interactive application is in a wake-up state, start a voice recognition thread to perform voice recognition on the audio data.

In an optional implementation manner, the audio data processing module is further configured to:
when the voice interactive application is in a wake-up state, start a voice recognition thread to perform voice recognition on the audio data, and start the wake-up thread to perform wake-up processing on the voice interactive application again according to the audio data.

In an optional implementation manner, the audio data processing module is further configured to:
when the voice interactive application is in the non-wake-up state, send the audio data to the wake-up thread through a voice management thread; and perform wake-up processing on the voice interactive application according to the audio data through the wake-up thread.

In an optional implementation manner, the audio data processing module is further configured to:
when the voice interactive application is in the wake-up state, send the audio data to the voice recognition thread through a voice management thread; and perform voice recognition on the audio data through the voice recognition thread.

In an optional implementation manner, the audio data processing module is further configured to:
when the voice interactive application is in the non-wake-up state, send the audio data to the wake-up thread and the voice recognition thread through a voice management thread; perform wake-up processing on the voice interactive application according to the audio data through the wake-up thread and perform voice recognition on the audio data through the voice recognition thread.

In an optional implementation manner, the microphone managing module is further configured to:
start the microphone management thread in a process in response to a starting instruction for the voice interactive application; and, through the microphone management thread, call an application programming interface (API) corresponding to the microphone, initiate the microphone and collect the audio data acquired by the microphone.

In an optional implementation manner, the microphone managing module is further configured for:
transmit the audio data to the voice management thread through the microphone management thread.

In an optional implementation manner, the microphone managing module is further configured to:
determine whether there exists a consumer of the audio data through the microphone management thread, where the consumer is a thread requesting the use of the audio data; when it is determined that there exists a consumer of the audio data, send the audio data to the voice management thread; when it is determined that there exists no consumer of the data, discard the audio data and collect a next frame of audio data.

In an optional implementation manner, the audio data processing module is further used to:
acquire state flag information of the voice interactive application through the voice management thread, and determine a current state of the voice interactive application according to the state flag information.

In an optional implementation manner, the audio data processing module is further used to:
set the state flag information to a wake-up state after the voice interactive application is waked up successful.

The apparatus provided in the embodiment of the present application may be specifically configured to execute the method embodiment provided in the above-mentioned embodiment, and the specific functions are not repeated here.

In the embodiments of the application, in the same process of the voice interactive application, the microphone management thread is specially responsible for collecting the audio data acquired by the microphone and transmitting the audio data to the voice management thread, and then the voice management thread is responsible for distributing the audio data to functional modules (including the wake-up engine and/or the recognition engine) that need the audio data according to the state of the voice interactive application, in this way, the wake-up engine and recognition engine can be realized in the same process without requesting the microphone by the wake-up engine and the recognition engine separately, thereby improving the efficiency of collecting the audio data acquired by the microphone by the wake-up engine and the recognition engine, avoiding the problem of losing part of the audio data due to waiting for preparation of the microphone device, thus improving the efficiency and accuracy of the voice interactive application; in addition, when the voice interactive application is started, the microphone management thread is started in the process of the voice interactive application to request the microphone. The microphone management thread continues to use the microphone and collects the audio data acquired by the microphone, until the voice interactive application is closed. The microphone management thread releases the microphone, requests the microphone for one time and uses it for a long time, thus reducing the waste of CPU and memory due to the maintenance of a thread pool and multiple times of requesting and releasing of the microphone. Furthermore, when the voice interactive application is in a non-wake-up state, the audio data is sent to the wake-up thread and the voice recognition thread, thereby interrupting the current voice recognition of the recognition engine through the wake-up engine, waking up the voice interactive application again, and directly entering to the next interaction to meet the needs of a user.

According to the embodiment of the application, the application also provides an electronic device and a readable storage medium.

According to the embodiment of the application, the application also provides a computer program product, the computer program product includes: a computer program, the computer program is stored in a readable storage medium, and at least one processor of an electronic device can read the computer program from the readable storage medium, at least one processor executes the computer program such that the electronic device executes the solution provided by any of the above embodiments.

According to an embodiment of the present application, the present application further provides a computer program stored in a readable storage medium, where at least one processor of an electronic device can read the computer program from the readable storage medium, and the at least one processor executes the computer program to enable the electronic device to execute the solution according to any one of the above embodiments.

FIG. 6 shows a schematic block diagram of an exemplary electronic device that may be configured to implement an embodiment of the present application. Electronic devices are designed to represent various forms of digital computers, such as laptops, desktops, workstations, personal digital assistants (PDA), servers, blade servers, mainframe computers, and other suitable computers. Electronic devices can also represent various forms of mobile devices, such as personal digital assistants (PDA), cellular phones, smart phones, wearable devices and other similar computing devices. The components shown herein, their connections and relationships, and their functions are only examples and are not intended to limit the implementation of the present disclosure described and/or claimed herein.

As shown in FIG. 6, the electronic device 600 includes a computing unit 601, which can execute various appropriate actions and processes according to a computer program stored in a read only memory (ROM) 602 or a computer program loaded into a random access memory (RAM) 603 from a storage unit 608. In the RAM 603, various programs and data required for the operation of the device 600 can also be stored. The calculation unit 601, ROM 602 and RAM 603 are connected to each other through a bus 604. An input/output (I/O) interface 605 is also connected to the bus 604.

A plurality of components in the device 600 are connected to the I/O interface 605, including an input unit 606, such as a keyboard, a mouse, and the like; an output unit 607, such as various types of displays, loudspeakers, and the like; a storage unit 608, such as a magnetic disk, an optical disk, and the like; and a communication unit 609, such as a network card, a modem, a wireless communication transceiver, and the like. The communication unit 609 allows the device 600 to exchange information/data with other devices through a computer network such as the Internet and/or various telecommunication networks.

The calculation unit 601 may be a variety of general and/or special processing components with processing and computing capabilities. Some examples of the computing unit 601 include, but are not limited to, a central processing unit (CPU), a graphics processing unit (GPU), various special artificial intelligence (AI) computing chips, various computing units running machine learning model algorithms, digital signal processors (DSP), and any appropriate processors, controllers, microcontrollers, etc. The calculation unit 601 performs various methods and processes described above, such as a voice data processing method. For example, in some embodiments, the voice data processing method may be implemented as a computer software program, which is physically included in a machine-readable medium, such as the storage unit 608. In some embodiments, part or all of the computer programs may be loaded and/or installed on the device 600 via the ROM 602 and/or communication unit 609. When a computer program is loaded into the RAM 603 and executed by the calculation unit 601, one or more steps of the voice data processing method described above may be executed. Alternatively, in other embodiments, the computing unit 601 may be configured to perform a voice data processing method in any other appropriate manner (e.g., by virtue of firmware).

Various implementations of the systems and technologies described above can be implemented in a digital electronic circuit system, an integrated circuit system, a field programmable gate array (FPGA), an application specific integrated circuit (ASIC), an application specific standard product (ASSP), a system on chip (SOC), a complex programmable logic device (CPLD), a computer hardware, firmware, software, and/or a combination of them. These various embodiments may include: implementing in one or more computer programs, the one or more computer programs may be executed and/or interpreted on a programmable system including at least one programmable processor, the programmable processor may be a dedicated or universal programmable processor, which can receive data and instructions from a storage system, at least one input device, and at least one output device, and transmit data and instructions to the storage system, the at least one input device, and the at least one output device.

Program code for implementing the methods of the present disclosure may be written in any combination of one or more programming languages. These program codes may be provided to a processor or controller of a general-purpose computer, a special-purpose computer, or other programmable data processing device so that when the program codes are executed by the processor or controller, the functions/operations specified in the flowchart and/or block diagram are implemented. The program code can be executed completely on the machine, partly on the machine, partly on the machine and partly on the remote machine as an independent software package, or completely on the remote machine or a server.

In the context of the present disclosure, a machine-readable medium may be a tangible medium, which may include or store a program for use by the instruction execution system, apparatus, or device or in combination with the instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination of the foregoing. More specific examples of the machine-readable storage media would include electrical connections based on one or more wires, portable computer disks, hard disks, random access memories (RAM), read-only memories (ROM), erasable programmable read-only memories (EPROM or flash memory), optical fibers, portable compact disk read-only memories (CD-ROM), optical storage devices, magnetic storage devices, or any suitable combination of the foregoing.

In order to provide interaction with the user, the system and technology described here can be implemented on a computer that has: a display device for displaying information to the user (for example, a CRT (cathode ray tube) or a liquid crystal display ((LCD) Monitor); and a keyboard and pointing device (for example, a mouse or trackball), through which the user can provide input to the computer. Other types of apparatus can also be used to provide interaction with the user; for example, the feedback provided to the user can be any form of sensory feedback (for example, visual feedback, auditory feedback, or tactile feedback); and can be in any form (including acoustic input, voice input, or tactile input) to receive input from the user.

The systems and technologies described here can be implemented in a computing system that includes a back-end component (for example, as a data server), or a computing system that includes an intermediate component (for example, an application server), or a computing system that includes a front-end component (for example, a user computer with a graphical user interface or a web browser through which the user can interact with the implementation of the system and technology described herein), or include such back-end components, intermediate components, or any combination of front-end components in a computing system. The components of the system can be connected to each other through any form or medium of digital data communication (for example, a communication network). Examples of communication networks include: local area networks (LAN), wide area networks (WAN), and the Internet.

Computer systems can include clients and servers. The client and server are generally far away from each other and usually interact through a communication network. The relationship between the client and the server is generated by computer programs that run on the corresponding computers and have a client-server relationship with each other. The server can be a cloud server, also known as a cloud computing server or a cloud host. It is a host product in the cloud computing service system to solve the shortcomings of difficult management and weak business scalability of the traditional physical host and virtual private server service (VPS). The server can also be a server of a distributed system, or a server combined with a blockchain.

It should be understood that the various forms of processes shown above can be used to reorder, add or delete steps. For example, the steps described in the present application can be executed in parallel, sequentially, or in a different order, as long as the desired result of the technical solution disclosed in the present application can be achieved, which is not limited herein.

The above specific implementations do not constitute a limitation on the scope of protection of the present application. Those skilled in the art should understand that various modifications, combinations, sub-combinations and substitutions can be made according to design requirements and other factors. Any modification, equivalent replacement and improvement made within the principle of the present application shall be included in the protection scope of the present application.

## Claims

1. A voice data processing method, comprising:
starting a microphone management thread to collect audio data acquired by a microphone in a process of a voice interactive application; and
when the voice interactive application is in a non-wake-up state, starting a wake-up thread to perform wake-up processing on the voice interactive application according to the audio data.

2. The method according to claim 1, further comprising:
when the voice interactive application is in a wake-up state, starting a voice recognition thread to perform voice recognition on the audio data.

3. The method according to claim 1, further comprising:
when the voice interactive application is in a wake-up state, starting a voice recognition thread to perform voice recognition on the audio data, and starting the wake-up thread to perform wake-up processing on the voice interactive application again according to the audio data.

4. The method according to claim 1, wherein the starting a wake-up thread to perform wake-up processing on the voice interactive application according to the audio data when the voice interactive application is in a non-wake-up state comprises:
when the voice interactive application is in the non-wake-up state, sending the audio data to the wake-up thread through a voice management thread; and
performing wake-up processing on the voice interactive application according to the audio data through the wake-up thread.

5. The method according to claim 2, wherein the starting a voice recognition thread to perform voice recognition on the audio data when the voice interactive application is in a wake-up state comprises:
when the voice interactive application is in the wake-up state, sending the audio data to the voice recognition thread through a voice management thread; and
performing voice recognition on the audio data through the voice recognition thread.

6. The method according to claim 3, wherein the starting a voice recognition thread to perform voice recognition on the audio data when the voice interactive application is in the wake-up state, and starting the wake-up thread to perform wake-up processing on the voice interactive application again according to the audio data comprises:
when the voice interactive application is in the non-wake-up state, sending the audio data to the wake-up thread and the voice recognition thread through a voice management thread; and
performing wake-up processing on the voice interactive application according to the audio data through the wake-up thread, and performing voice recognition on the audio data through the voice recognition thread.

7. The method according to claim 1, wherein the starting a microphone management thread to collect audio data acquired by a microphone comprises:
starting the microphone management thread in the process in response to a starting instruction for the voice interactive application; and
through the microphone management thread, calling an application programming interface, API, corresponding to the microphone, initializing the microphone and collecting the audio data acquired by the microphone.

8. The method according to any one of claims 4-6, wherein after the starting a microphone management thread to collect audio data acquired by a microphone, the method further comprises:
transmitting the audio data to the voice management thread through the microphone management thread.

9. The method according to claim 8, wherein the transmitting the audio data to the voice management thread through the microphone management thread comprises:
determining whether there exists a consumer of the audio data through the microphone management thread, wherein the consumer is a thread requesting to use the audio data;
when it is determined that there exists a consumer of the audio data, sending the audio data to the voice management thread; and
when it is determined that there exists no consumer of the audio data, discarding the audio data and collecting a next frame of audio data.

10. The method according to claim 8, further comprising:
acquiring state flag information of the voice interactive application through the voice management thread and determining a current state of the voice interactive application according to the state flag information.

11. The method according to claim 10, further comprising:
setting the state flag information to a wake-up state, after the voice interactive application is waked up successfully.

12. A voice data processing apparatus, comprising:
a microphone managing module, configured to start a microphone management thread to collect audio data acquired by a microphone in a process of a voice interactive application; and
an audio data processing module, configured to: when the voice interactive application is in a non-wake-up state, start a wake-up thread to perform wake-up processing on the voice interactive application according to the audio data.

13. The apparatus according to claim 12, wherein the audio data processing module is further configured to:
when the voice interactive application is in a wake-up state, start a voice recognition thread to perform voice recognition on the audio data, optionally,
wherein the audio data processing module is further configured to:
when the voice interactive application is in the wake-up state, send the audio data to the voice recognition thread through a voice management thread; and
perform voice recognition on the audio data through the voice recognition thread.

14. The apparatus according to claim 12, wherein the audio data processing module is further configured to:
when the voice interactive application is in a wake-up state, start a voice recognition thread to perform voice recognition on the audio data, and start the wake-up thread to perform wake-up processing on the voice interactive application again according to the audio data, optionally,
wherein the audio data processing module is further configured to:
when the voice interactive application is in the non-wake-up state, send the audio data to the wake-up thread and the voice recognition thread through a voice management thread; and
perform wake-up processing on the voice interactive application according to the audio data through the wake-up thread and perform voice recognition on the audio data through the voice recognition thread.

15. The apparatus according to claim 12, wherein the audio data processing module is further configured to:
when the voice interactive application is in the non-wake-up state, send the audio data to the wake-up thread through a voice management thread; and
perform wake-up processing on the voice interactive application according to the audio data through the wake-up thread, optionally,
wherein the microphone managing module is further configured to:
transmit the audio data to the voice management thread through the microphone management thread, optionally,
wherein the microphone managing module is further configured to:
determine whether there exists a consumer of the audio data through the microphone management thread, wherein the consumer is a thread requesting to use the audio data;
when it is determined that there exists a consumer of the audio data, send the audio data to the voice management thread; and
when it is determined that there exists no consumer of the audio data, discard the audio data and collect a next frame of the audio data.

16. A non-transitory computer-readable storage medium storing a computer instruction to cause the computer to execute the method according to any one of claims 1-11.

17. A computer program product, comprising a computer program, the computer program, when executed by a processor, implements the method according to any one of claims 1-11.
